# EUROPÄISCHE PATENTANMELDUNG

(11) **EP 2 540 575 A2**
(43) Veröffentlichungstag der Anmeldung: **02.01.2013**
(21) Anmeldenummer: 12173553.4
(22) Anmeldetag: 26.06.2012
(51) Int. Cl.: B60R 19/12

(54) **Stoßfängeranordnung für ein Kraftfahrzeug**

(30) Priorität: 30.06.2011 DE 102011051481
(71) Anmelder: Benteler Automobiltechnik GmbH, 33102 Paderborn (DE)
(72) Erfinder: Kavik, Tobias, 0854 Oslo (NO); Hübel, Claus, 81827 München (DE)
(74) Vertreter: Griepenstroh, Jörg

(57) **Zusammenfassung**

Stoßfängeranordnung für ein Kraftfahrzeug mit eine über Deformationselemente (4 - 7) an Längsträgern gekoppelten Querträger (2) in einer ersten Lastebene(E1) und wenigstens eine unterhalb oder oberhalb des Querträgers (2) angeordneten zweiten Querträger (3) in einer zweiten Lastebene (E2), wobei die Querträger (2, 3) linke und rechte Endabschnitte (14-17) aufweisen, welche seitlich über die Deformationselemente (4 - 7) vorstehen, wobei einander vertikal benachbarte linke Endabschnitte und rechte Endabschnitte (14-17) jeweils über Stützelemente (18, 19) miteinander verbunden sind, wobei die Stützelemente (18, 19) mit den Deformationselementen (4, 5) des ersten Querträgers (2) verbunden sind.

## Beschreibung

Die Erfindung betrifft eine Stoßfängeranordnung für ein Kraftfahrzeug mit den Merkmalen im Oberbegriff des Patentanspruchs 1.

Im Front- und Heckbereich von Kraftfahrzeugen werden Stoßfängersysteme mit Energie absorbierenden Elementen verbaut. Oftmals werden im Frontendbereich derartige Systeme in mehreren übereinander liegenden Ebenen verbaut, um unterschiedlichen Funktionen gerecht zu werden.

Aus der DE 10 2009 031 745 A1 ist beispielsweise ein Stoßfängersystem mit einem Deformationselement bekannt, wobei das Deformationselement mit zumindest zwei Querträgern eines Fahrzeugs verbunden ist. Es gibt also einen oberen und/oder einen unteren Querträger, die jeweils Endabschnitte aufweisen, welche seitlich über die Deformationselemente vorstehen. Das Deformationselement ist gleichzeitig Teil von zwei oder mehr Lastpfaden. Da ein gemeinsames Deformationselement verwendet wird, ist auch ein gleichartiges Deformationsverhalten zu erwarten, was bei einem Offset-Crash von Vorteil ist. Ein Offset-Crash ist ein Crashtest, bei dem ein Fahrzeug mit nur einer Frontseite gegen ein Hindernis fährt, bei dem es sich um ein anderes Fahrzeug handeln kann (versetzter Frontalaufprall).

Ebenso ist es im Stand der Technik bekannt, einen unteren Zusatzstoßfänger über sich von einem Hauptstoßfänger nach unten erstreckende Stützarme mit dem auptstoßfänger zu verbinden. Die Festigkeit der Stützarme ist so eschaffen, dass sie sich zwar nicht im Falle einer Fußgängerkollision, wohl aber im Falle einer Gegenstandskollision plastisch verformen (DE 10 2005 018 348 A1).

Bei besonders breiten Stoßfängeranordnungen, d. h. bei Stoßfängeranordnungen, bei welchen die endseitigen Abschnitte der Querträger seitlich über die Crashboxen hinaus ragen, können sich Probleme bei der Offset-Crash-Performance ergeben, da aufgrund der verschiedenen übereinanderliegenden Lastpfade bzw. Querträger das Risiko des Verkeilens mit einem gegnerischen Fahrzeug steigt. Höhere Anforderungen an die Fahrzeughersteller werden auch durch neue Crashtestszenarien bei versetztem Aufprall gestellt. Dabei droht entweder das unzulässige Eindringen von schmalen Hindernissen, insbesondere Bäumen, in den Motorraum, oder aber die Fahrzeuge laufen Gefahr, sich in ihrem Rad- bzw. adkastenbereichen zu verkeilen.

Der Erfindung liegt die Aufgabe zugrunde, eine Stoßfängeranordnung mit den Merkmalen im Oberbegriff des Patentanspruchs 1 dahingehend weiter zu entwickeln, dass die Energieaufnahme und Energieübertragung bei mehreren Lastpfaden in unterschiedlichen, vertikal übereinander liegenden Lastebenen unter besonderer Berücksichtigung der Crashanforderungen bei breiter Fahrzeugfront mit abstehenden Querträgerenden verbessert wird.

Diese Aufgabe ist bei einer Stoßfängeranordnung mit den Merkmalen des Patentanspruchs 1 gelöst.

Vorteilhafte Weiterbildungen der Erfindung sind Gegenstand der Unteransprüche.

Die erfindungsgemäße Stoßfängeranordnung für ein Kraftfahrzeug sieht einen ersten Querträger und wenigstens einen unterhalb oder oberhalb des ersten Querträgers angeordneten zweiten Querträger vor. Der erste Querträger ist über Deformationselemente mit Längsträgern des Kraftfahrzeugs gekoppelt. Beide Querträger besitzen linke und rechte Endabschnitte, welche seitlich, d. h. quer zur Fahrtrichtung, über die Deformationselemente vorstehen. Mit anderen Worten ist die in Fahrzeugquerrichtung gemessene Breite des Querträgers größer als der Abstand der Deformationselemente, bei denen es sich insbesondere um Crashboxen handelt. Erfindungsgemäß ist vorgesehen, dass einander benachbarte linke Endabschnitte und rechte Endabschnitte jeweils über Stützelemente miteinander verbunden sind. Die Stützelemente sind zudem mit Deformationselementen des ersten Querträgers verbunden.

Die Stützeelemente erfüllen damit eine Doppelfunktion: Zum einen erfolgt die Verbindung zweier übereinander angeordneter Querträger. Andererseits wird durch die Stützelemente sichergestellt, dass beide in unterschiedlichen Höhenebenen angeordneten Lastpfade miteinander verbunden sind. Das heißt, bei einer Beanspruchung des zweiten Querträgers erfolgt eine Krafteinleitung in eine erste Lastebene, d.h. in die Deformationselemente des ersten Querträgers. Sofern der zweite Querträger auch über Deformationselemente gehalten ist, erfolgt umgekehrt eine Krafteinleitung von dem oberen Deformationselement über die Stützelemente in eine zweite Lastebene, d. h. in die Deformationselemente des zweiten Querträgers. Die Verknüpfung der Lastpfade in Kombination mit der besonderen Anordnung der Stützelemente, gewissermaßen in den Eckbereichen zwischen den Stützelementen und den Endabschnitten der Querträger, führt zu einer Gewichtsreduzierung, weil innenseitig zwischen den Deformationselementen liegende Verbindungsstreben zwischen dem ersten und dem zweiten Querträger entfallen können. Zudem können auch bei sehr breiten Fahrzeugen mit großen Überhängen im Bereich der Endabschnitte verbesserte Abstützungen erreicht werden, was insbesondere die Offset-Crash-Performance steigert, da das Abknicken der Endabschnitte und die Gefahr des Verkeilens der Staßfängerquerträger in das gegnerische Fahrzeug vermindert wird. Durch die Stützelemente werden obere und untere Querträger miteinander gekoppelt und unter Eingliederung der jeweiligen Deformationselemente zusammengehalten, um dabei bestmöglich Aufprallenergie abzubauen.

Es ist möglich, dass ein erster Querträger in Längsrichtung des Fahrzeugs gegenüber dem zweiten Querträger vorsteht. Bei einem Versatz von z. B. 25 mm ergibt sich zwangsläufig, dass der erste Querträger bei einem Anprall auch zuerst belastet wird. Dadurch, dass die Anprallkräfte über das Stützelement im Eckbereich nun in den zweiten Querträger eingeleitet werden, wird der Lastpfad aufgeteilt. Deformationselemente des ersten Querträgers und des zweiten Querträgers nehmen gemeinsam Anprallkräfte auf, auch wenn der untere Querträger noch gar nicht belastet wird. Dieselbe Situation ergibt sich, wenn analog ein unterer Querträger gegenüber einem oberen Querträger vorsteht. Auch in diesem Fall erfolgt eine Aufteilung der Lastpfade, was zu einer Steigerung der Crashperformance führt. Selbstverständlich ergeben sich auch dann gute Werte, wenn beide Querträger bündig in Fahrzeuglängsrichtung ausgerichtet sind.

Die erfindungsgemäßen Vorteile ergeben sich auch dann, wenn wenigstens ein weiterer Querträger oberhalb oder unterhalb der ersten und zweiten Querträger angeordnet ist, wobei dessen linken und rechten Endabschnitte seitlich über Deformationselemente vorstehen und wobei alle linken und rechten Endabschnitte über Stützelemente miteinander verbunden sind. Das bedeutet, dass auch drei oder mehr übereinander liegende Lastebenen vorgesehen sein können und all diese Lastebenen über die Stützelemente miteinander gekoppelt sein können, damit alle Lastebenen an dem Abbau der Anprallenergie teilhaben. Die Lastpfade werden auf die Weise miteinander verknüpft.

Es ist im Rahmen der Erfindung dementsprechend möglich, dass der zweite und/oder wenigstens einer der weiteren Querträger über Deformationselemente an den Längsträgern abgestützt ist, wobei alle Deformationselemente jeweils einer Fahrzeugseite über die Stützelemente miteinander verbunden sind. Gerade dadurch, dass die Stützelemente an den Deformationselementen angreifen, erfolgt eine unmittelbare Krafteinleitung in die zur Deformation vorgesehenen Bauteile, was unmittelbar zu einer hohen nergieumwandlung führt. Diese Bauteile sind in einer oberen Lastebene insbesondere die Längsträger und nachgeordnet die A-Säulen und in einer unteren Lastebene insbesondere ein unterer Längsträger und der Achsträger.

Aufgrund der durch die vorgeschriebenen Crashtest vorbestimmten Anprallrichtungen und Krafteinleitungspfade die Stützelemente mit in Kraftflussrichtung weisenden Verstärkungen versehen. Die Hauptkraftflussrichtung ist primär die Horizontalrichtung, so dass auch die Verstärkungen in Horizontalrichtung orientiert sein können.

Die zweite Kraftflussrichtung eist von einem Endabschnitt zu einem Deformationselement einer darunter bzw. darüber liegenden, benachbarten Lastebene, insbesondere der eines benachbarten Querträgers. Die in Kraftflussrichtung weisenden Verstärkungen können dementsprechend diagonal, d. h. im Winkel zur Horizontalebene ausgerichtet sein.

Bei den Verstärkungen kann es sich insbesondere um geometrische Veränderungen handeln, um die Biegesteifigkeit zu erhöhen. Hierbei handelt es sich insbesondere um Ausstellungen in einem flächigen Bauteil. Die Verstärkungen können auch Materialanhäufungen sein oder lokale Materialveränderungen, beispielsweise Bereiche höherer Festigkeit.

Grundsätzlich kann das Stützelement auch als Hohlprofil ausgebildet sein. Es kann beispielsweise als Quader, Rohr oder Dreieckprisma gestaltet sein. Hinsichtlich der verwendeten Werkstoffe kann auf Metalle, insbesondere Aluminium und Stahl zurückgegriffen werden, aber auch Kunststoffe wie EPP (expandiertes Polypropylen) oder aserverbundkunststoffe unter Verwendung von Glas- oder Carbonfasern können zum Einsatz kommen.

Je nach verwendeten Werkstoff und Konfiguration der angrenzenden Bauteile können die Stützelemente form-, kraft- oder stoffschlüssig mit dem jeweiligen Querträger und dem Deformationselement verbunden sein. Möglich sind Verbindungstechniken wie Verschrauben, Clinchen oder Schweißen, Löten oder Kleben. Formschlüssige Verbindungen können durch Prägungen, insbesondere vertikale Prägungen, Kerben oder Schlitze an dem Querträger und/oder dem Deformationselement realisiert werden. Besonders bevorzugt ist die Verbindung von Querträgern und Deformationselementen mittels der Stützelemente durch thermisches Fügen, insbesondere Schweißen.

Es hat sich gezeigt, dass der Erfindung eine Wandstärkenreduktion um circa 20 % im Bereich des Hauptquerträgers möglich ist, was bei einem Stoßfängersystem aus Aluminium zu einer Gewichtsreduzierung von 5 Kilo auf 4 Kilo führt für den Belastungsfall eines Zentralaufpralls.

Um die Abstützung des Querträgers, insbesondere an flächig ausgestalteten Stützelementen zu verbessern, können die Stützelemente an den Verlauf des Deformationselements und/oder einer Rückseite der Querträger angepasste, abgewinkelte Endstücke aufweisen. Im Bereich dieser abgewinkelten Endstücke erfolgt dann die Verschraubung des Stützelements mit dem Querträger und/oder der Crashbox.

Um eine hinreichende Abstützung der Endabschnitte zu erreichen, ist vorgesehen, dass die Stützelemente ihrem der Crashbox zugewandten Ende im Abstand von der Rückseite des Querträgers mit dem Deformationselement, insbesondere der Crashbox, verbunden sind. Dadurch wird eine im Wesentlichen dreieckige Struktur bestehend aus Crashbox, Endabschnitt des Querträgers und Stützelement geschaffen, die in sich verwindungssteif ist und geeignet ist, auch Kräfte, die an den äußersten Enden der Endabschnitte angreifen, unmittelbar in die Deformationselemente einzuleiten.

Die Querträger können in ihrem Verlauf gerade, gekrümmt oder auch abgewinkelt sein. Dies hängt von der Geometrie der Außenhaut bzw. dem Fahrzeugfrontdesign eines Kraftfahrzeugs ab. Grundsätzlich ist es im Rahmen der Erfindung möglich, Querträger zu verwenden, die als geschlossene oder offene Hohlprofile ausgebildet sind. Bei Hohlprofilen in Schalenbauweise handelt es sich insbesondere um rollgeformte Bauteile, vorzugsweise aus Stahl. Bei geschlossenen Hohlprofilen kann es sich um extrudierte Hohlprofile handeln, insbesondere aus einem Aluminiumwerkstoff. Die Querträger können nach vorn oder auch zum Kraftfahrzeug hin auf ihrer rückwärtigen Seite zusätzlich mit weiteren Deformationselementen versehen sein, insbesondere mit einem Schaumwerkstoff, Gummi, Feinblech etc, um weitere Aufprallenergie umzuwandeln.

Hinsichtlich der Deformationselemente ist die Erfindung nicht auf ein bestimmtes Design, insbesondere auf ein Crashboxdesign, eingeschränkt. Theoretisch ist es denkbar, einen Monoquerträger mit integrierter Crashbox vorzusehen, wobei der sich im Wesentlichen in Fahrzeuglängsrichtung erstreckende Bestandteil eines solchen Monoquerträgers im Sinne der Erfindung als Deformationselement, d. h. als Crashbox fungiert, während der sich quer zur Fahrtrichtung erstreckende Teil als Querträger bezeichnet wird.

Es ist im Rahmen der Erfindung möglich, dass die Abstützung an den Deformationselementen im Bereich des längsträgerseitigen Endes der Deformationselemente erfolgt, d. h. im Wesentlichen an einem Befestigungsflansch des Deformationselementes.

Falls das Deformationselement selbst endseitiger des Längsträgers ist, erfolgt die Abstützung sinngemäß am Längsträger. Vorzugsweise handelt es sich im Rahmen der Erfindung bei den Deformationselementen jedoch um Bauteile, die zum Austausch bei einem Crash vorgesehen sind und somit nicht materialeinheitlich einteiliger Bestandteil des Längsträgers sind.

Mit der Erfindung können höhere Crashanforderungen, insbesondere im Hinblick an die sogenannte Crashbox-Performance erfüllt werden, so dass auch bei High-Speed-Tests Anprallenergie zuverlässig umgewandelt werden kann. Die Erfindung kann insbesondere bei sehr breiten und damit schweren PKW zum Einsatz kommen. Gerade bei schweren PKW treten hohe Anprallenergien auf, die durch entsprechend konfigurierte Stoßfängeranordnungen erfindungsgemäß mit mehreren Lastpfaden aufgefangen werden. Selbstverständlich ist die Erfindung auch bei leichten PKW und auch bei einem zentralen Aufprall von Vorteil

Die Erfindung wird nachfolgend anhand von in den schematischen Zeichnungen dargestellten Ausführungsbeispielen näher erläutert. Es zeigen:
- Figur 1: eine perspektivische Darstellung einer ersten Stoßfängeranordnung in rückwärtiger Ansicht;
- Figur 2: eine perspektivische Darstellung einer zweiten Stoßfängeranordnung in rückwärtiger Ansicht;
- Figur 3: eine schematische Darstellung des Endbereichs einer Stoßfängeranordnung in Blickrichtung von oben;
- Figur 4: ein Stützelement in der Seitenansicht und in der Draufsicht;
- Figur 5: ein weiteres Stützelement in der Seitenansicht und in der Draufsicht und
- Figur 6: ein weiteres Stützelement in der Seitenansicht und der Draufsicht.

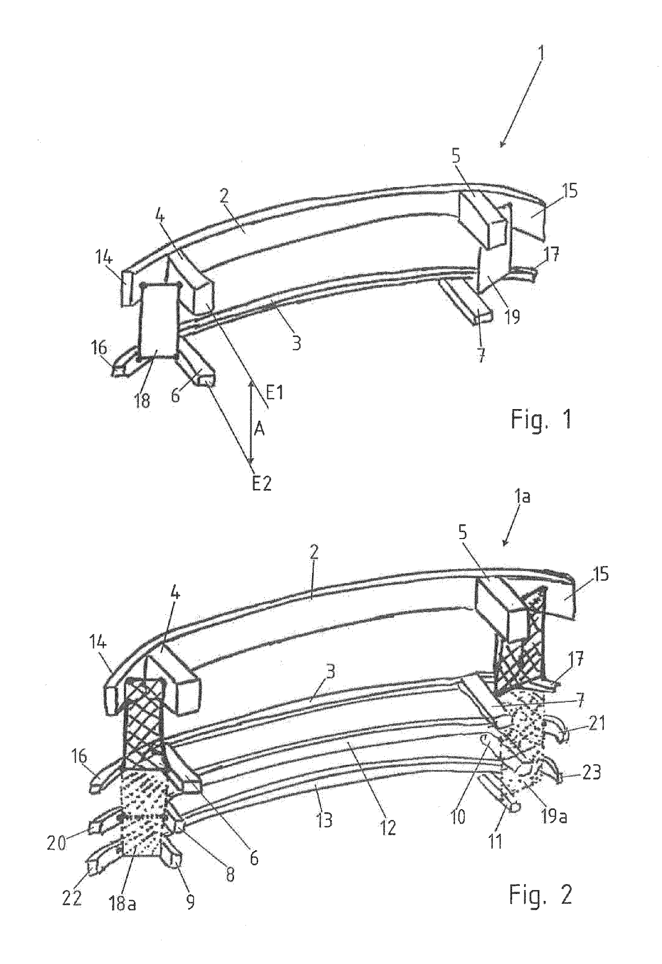

Figur 1 zeigt eine Stoßfängeranordnung 1 für den Frontbereich eines nicht näher dargestellten Kraftfahrzeugs. Die Stoßfängeranordnung 1 umfasst als tragende Bauteile einen ersten Querträger 2 in einer ersten horizontalen Lastebene E1 sowie einen unterhalb des ersten Querträger 2 angeordneten zweiten Querträger 3 in einer zweiten horizontalen Lastebene E2. Die beiden Querträger 2, 3 bzw. Lastebenen E1, E2 befinden sich im Abstand A zueinander. Sie sind jeweils bogenförmig gekrümmt. Der erste und der zweite Querträger 2, 3 sind jeweils über Deformationselemente 4 - 7 an einem nicht näher dargestellten Längsträger der Karosserie des Kraftfahrzeugs abgestützt. Bei den Deformationselementen 4 - 7 handelt es sich um Crashboxen, die sich ebenfalls in den entsprechenden Lastebenen E1, E2 befinden.

Die Querträger 2, 3 sind relativ breit und ragen mit ihren Endabschnitten 14-17 über die Deformationselemente 4-7 seitlich hinaus. Bei ersonenkraftwagen ragen die Endabschnitte 14-17 etwa 100-300 mm seitlich über die Deformationselemente 4 - 7 hinaus. Bei Lastkraftwagen sind auch mehr als 300 mm möglich. Insgesamt verlaufen die Querträger 2, 3 einschließlich ihrer jeweiligen Endabschnitte 14-17 parallel zueinander.

Wesentlich bei der erfindungsgemäßen Stoßfängeranordnung 1 ist, dass einander vertikal benachbarte linke Endabschnitte 14, 16 sowie einander vertikal benachbarte rechte Endabschnitte 15, 17 über vertikal orientierte Stützelemente 18, 19 miteinander verbunden sind. Die Stützelemente 18, 19 sind in diesem Beispiel plattenförmig konfiguriert und verbinden nicht nur die Endabschnitte 14, 16 bzw. 15, 17 miteinander, sondern auch die den jeweiligen Endabschnitten 14-17 benachbarten Deformationselemente 4-7. Durch die Stützelemente 18, 19 können Kräfte, die beispielsweise in den der Bildebene links oben dargestellten Endabschnitt 14 des ersten Querträgers 2 eingeleitet werden, unmittelbar über das Stützelement 18 in die obere Crashbox 4 eingeleitet werden. Zudem können Kräfte vom oberen Endabschnitt 14 auch in die untere Crashbox 6 des zweiten Querträgers 3 eingeleitet werden. Dadurch wird mehr Anprallenergie abgebaut, als bei einer Einleitung der Anprallkraft ausschließlich in die obere Crashbox 4.

Umgekehrt, d. h. bei einer Anprallkraft, die auf den unteren Endabschnitt 16 oder allgemein auf den unteren, zweiten Querträger 3 einwirkt, ist auch der obere Querträger durch die Stützelemente 18, 19, die an den oberen Crashboxen 4, 5 angreifen, an dem Energieabbau beteiligt. In jedem Fall wird ein zweiter Lastpfad mit der Anprallkraft beaufschlagt. Zugleich bewirken die Stützelemente 18 eine Abstützung der freien Endabschnitte 14-17, so dass die Endabschnitte 14-17 weiter auskragen können. Die Abstützung ist insgesamt verbessert.

Die Ausführungsform der Figur 2 sieht zwei weitere Querträger 12, 13 unterhalb des zweiten Querträgers 3 vor. Der erste Querträger 2 ist in diesem Ausführungsbeispiel wieder der obere Querträger. Die weiteren Querträger 12, 13 sind als Zusatz zu verstehen, wobei hinsichtlich der Bezugszeichen auf die Bezugszeichen der Figur 1 zurückgegriffen wird. Bei der Stoßfängeranordnung 1a gemäß Figur 2 sind im Unterschied zu dem Ausführungsbeispiel der Figur 1 zwei zusätzliche Lastpfade vorgesehen, bedingt durch die zusätzlichen Querträger 12, 13, die zusätzlichen Deformationselemente 8-11 und die entsprechend länger gestalteten Stützeelemente 18a, 19a, über welche sämtliche Endabschnitte 14 - 17, 20 - 23 sowie Deformationselemente 4-11 miteinander verbunden sind. Die Stützelemente 18a, 19a sind in ihrem Verlauf in der Bildebene von oben nach unten betrachtend mit einer unterschiedlichen Schraffur versehen, um zu verdeutlichen, dass es sich bei dieser Stoßfängeranordnung 1a um ein Baukastensystem handelt, das durch entsprechend größere bzw. in der Vertikalebene betrachtet längere Stützelemente 18a, 19a und zusätzliche Querträger 12, 13 modular erweiterbar ist.

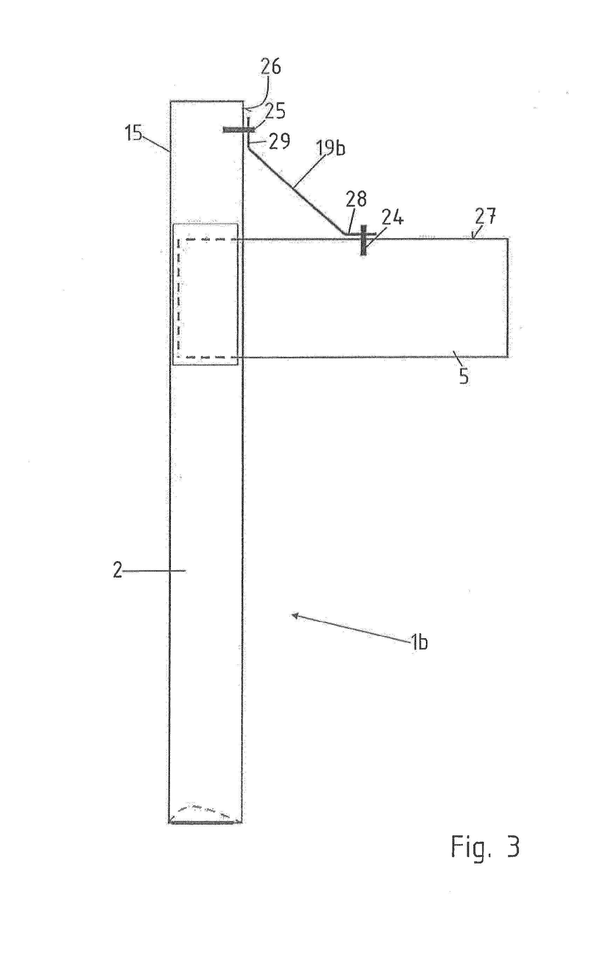

Figur 3 zeigt eine Draufsicht auf eine rein schematisch dargestellte Stoßfängeranordnung 1 b, umfassend einen in diesem Ausführungsbeispiel gerade dargestellten Querträger 2, ein Deformationselement 5 in Form einer Crashbox, die senkrecht zum Querträger 2 angeordnet ist sowie ein Stützelement 19b in Form eines mehrfach abgewinkelten lechs. Das Stützelement 19b ist über Bolzen 24, 25 einerseits it der Rückseite 26 des Endabschnitts 15 Querträgers 2 verbunden. Das andere Ende des Stützelements 19b ist an einer Außenseite 27 des Deformationselements 5 befestigt. Die Befestigung an der Außenseite 27 des Deformationselements 5 erfolgt im Abstand zur Rückseite 26 des Endabschnitts 15, so dass ein Dreieck ausgebildet wird. An dem äußeren Endabschnitt 15 des Querträgers 2 angreifende Kräfte werden mithin nicht nur über den Querträger 2, sondern auch direkt über das Stützelement 19b in das Deformationselement 5 eingleitet. Um die Krafteinleitung zu verbessern, ist das Stützelement 19b an den Verlauf der Rückseite 26 des Endabschnitts 15 bzw. der Außenseite 27 des Deformationselements 5 angepasst, in diesem Fall durch abgewinkelte Endstücke 28, 29, welche von den Bolzen 24, 25 durchsetzt sind.

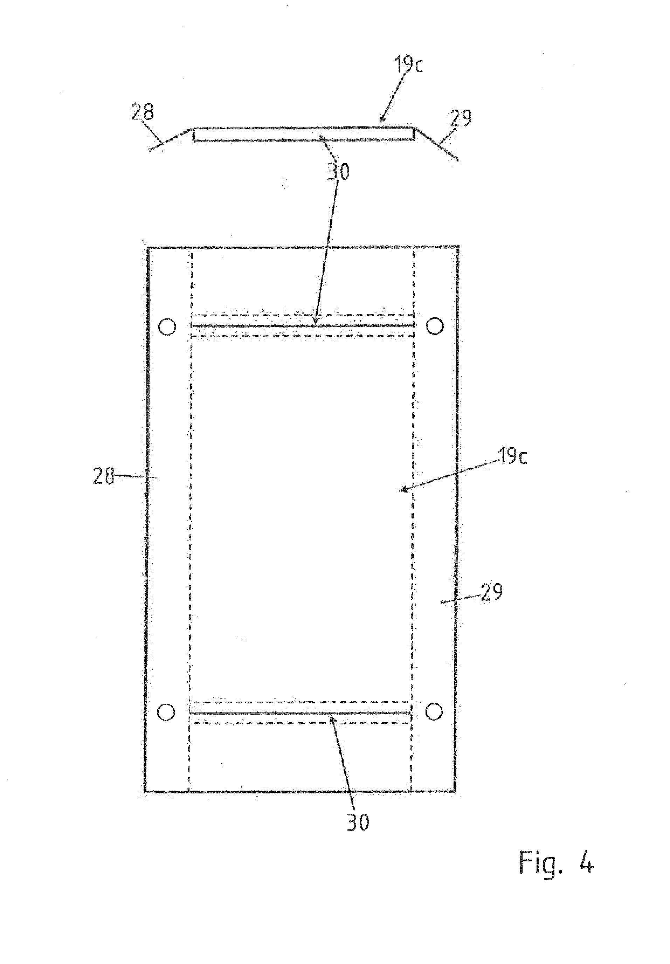

Die Figuren 4 bis 6 zeigen drei unterschiedliche Ausführungsformen von Stützelementen 19c-e. Es handelt sich um Blechbauteile mit jeweils abgewinkelten Endstücken 28, 29, wobei hierbei auf die in Figur 3 eingeführten Bezugszeichen zurückgegriffen wird. Das besondere an den im Wesentlichen rechteckig konfigurierten Stützelementen 19c-e ist, dass zusätzlich zu den Endstücken 28, 29 Verstärkungen 30, 31 vorgesehen sind. In Figur 4 handelt es sich bei den Verstärkungen 30 um zwei dreieckförmige Ausstellung, die in Querrichtung des dargestellten Stützelements 19c verlaufen.

In der Bildebene oben der Figuren 4 - 6 ist jeweils eine Schnittdarstellung des Stützelementes 19c-e dargestellt.

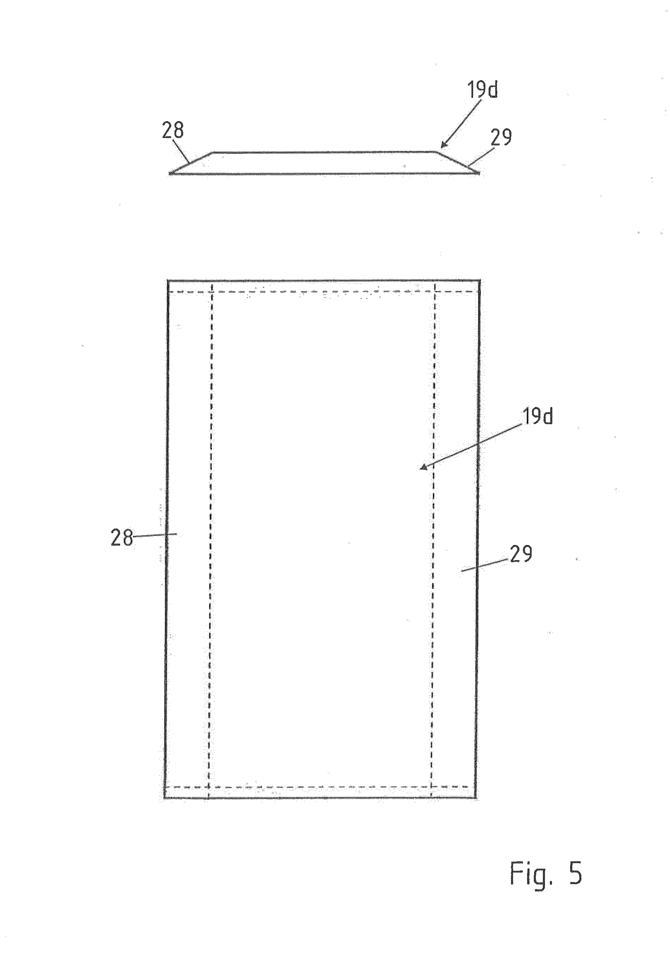

Während das Stützelement 19c in Figur 4 einlagig ist, handelt es sich bei dem Stützelement 19d in Figur 5 um ein geschlossenes Hohlprofil mit einem flachen trapezförmigen Querschnitt. Die Flanken des Trapezes dienen dabei als schräge Endstücke 28, 29 zur Anlage an dem Querträger bzw. der Crashbox.

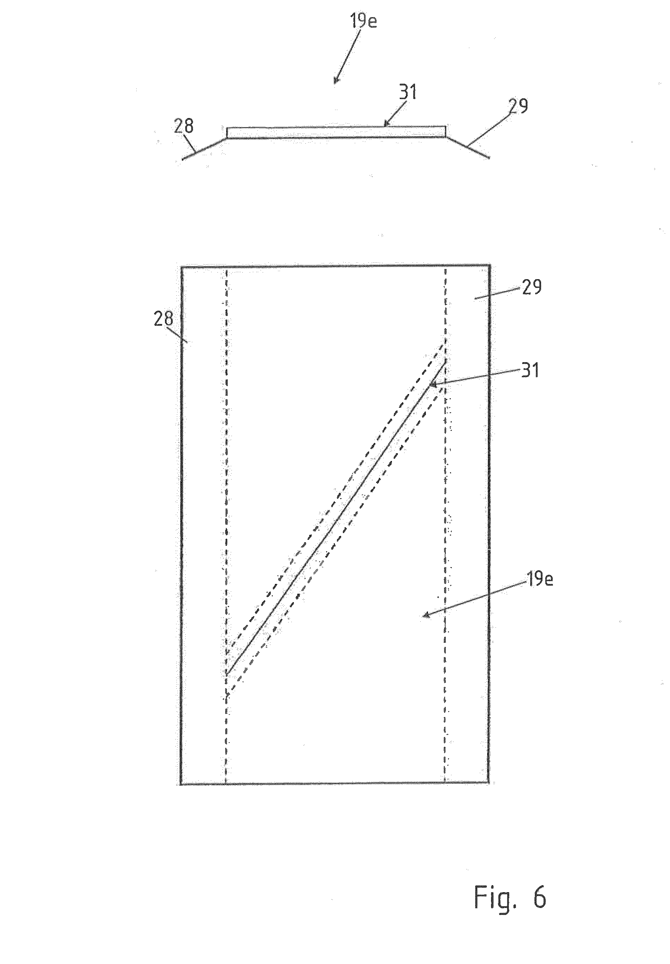

Figur 6 zeigt schließlich ein Stützelement 19e mit einer in der Bildebene diagonal von links unten nach rechts oben verlaufenden Verstärkung 31. Im Unterschied zu der Ausführungsform der Figur 4 ist die Verstärkung 31 nicht in Richtung der Endstücke 28, 29 ausgestellt, sondern in die entgegengesetzte Richtung. In der in Figur 6 oben dargestellten Ansicht ist die so hergestellte Ausstellung als balkenförmige Erhöhung zu erkennen. Die Verstärkung 31 besitzt den gleichen dreieckförmigen Querschnitt wie die Verstärkung 30 in Figur 4.

### Bezugszeichen:

- 1 -: Querträger
- 1b -: erster Querträger
- 2-: Querträger
- 3 -: Querträger
- 4 -: Deformationselement
- 5 -: Deformationselement
- 6 -: Deformationselement
- 7 -: Deformationselement
- 8 -: Deformationselement
- 9 -: Deformationselement
- 10-: Deformationselement
- 11 -: Deformationselement
- 12 -: weiterer Querträger
- 13 -: Querträger
- 14 -: Endabschnitt
- 15-: Endabschnitt
- 16-: Endabschnitt
- 17-: Endabschnitt
- 18-: Stützelement
- 18a-: Stützelement
- 19-: Stützelement
- 19a -: Stützelement
- 19b: Stützelement
- 19c -: Stützelement
- 19d: Stützelement
- 19e -: Stützelement
- 20-: Endabschnitt
- 21 -: Endabschnitt
- 22-: Endabschnitt
- 23-: Endabschnitt
- 24-: Bolzen
- 25 -: Bolzen
- 26 -: Rückseite
- 27: Außenseite
- 28 -: Endstücke
- 29 -: Endstücke
- 30 -: Verstärkung
- 31 -: Verstärkung

- A -: Abstand
- E1 -: Lastebene
- E2-: Lastebene

## Patentansprüche

1. Stoßfängeranordnung für ein Kraftfahrzeug mit einem über Deformationselemente (4-11) an Längsträgern gekoppelten ersten Querträger (2) in einer ersten Lastebene (E1) und wenigstens einem unterhalb oder oberhalb des Querträgers (2) angeordneten zweiten Querträger (3, 12, 13) in einer zweiten Lastebene (E2), wobei die Querträger (2, 3, 12, 13) linke und rechte Endabschnitte (14-17, 20-23) aufweisen, welche seitlich über die Deformationselemente (4-11) vorstehen, **dadurch gekennzeichnet, dass** einander vertikal benachbarte linke Endabschnitte und rechte Endabschnitte (14-17,20-23) jeweils über Stützelemente (18,18a,19,19a-e) miteinander verbunden sind, wobei die Stützelemente (18, 18a, 19, 19a - e) mit den Deformationselementen (4, 5) des Querträgers (2) verbunden sind.

2. Stoßfängeranordnung nach Anspruch 1, **dadurch gekennzeichnet, dass** wenigstens ein weiterer Querträger (12, 13) oberhalb oder unterhalb des Querträgers (2) in einer weiteren Lastebene angeordnet ist, wobei dessen linke und rechte Endabschnitte (20 - 23) seitlich über die Deformationselemente (8-11) vorstehen, wobei alle linken und rechten Endabschnitte (14-17,20-23) jeweils über die Stützelemente (18, 18a, 19, 19a - e) miteinander verbunden sind.

3. Stoßfängeranordnung nach Anspruch 1 oder 2, **dadurch gekennzeichnet, dass** der zweite und/oder wenigstens einer der weiteren Querträger (3, 12, 13) über Deformationselemente (6 - 11) an den Längsträgern abgestützt ist, wobei alle Deformationselemente (4-11) über die Stützelemente (18, 18a, 19, 19a - e) miteinander verbunden sind.

4. Stoßfängeranordnung nach einem der Ansprüche 1 bis 3, **dadurch gekennzeichnet, dass** die Stützelemente (19c, 19e) in raftflussrichtung weisende Verstärkungen (30, 31) aufweisen.

5. Stoßfängeranordnung nach Anspruch 4, **dadurch gekennzeichnet, dass** eine Kraftflussrichtung von einem Endabschnitt (14-17, 20-23) zu einem Deformationselement (8-11) eines benachbarten Querträgers (2,3, 12, 13) weist.

6. Stoßfängeranordnung nach Anspruch 4 oder 5, **dadurch gekennzeichnet, dass** die Verstärkung (30, 31) als Ausstellung in einem flächigen Bauteil ausgebildet ist.

7. Stoßfängeranordnung nach einem der Ansprüche 1 bis 5, **dadurch gekennzeichnet, dass** das Stützelement (19d) als Hohlprofil ausgebildet ist.

8. Stoßfängeranordnung nach einem der Ansprüche 1 bis 7, **dadurch gekennzeichnet, dass** Stützelement (19a-e) an den Verlauf des Deformationselements (4-11) und/oder einer Rückseite (26) der Querträger (2) angepasste, abgewinkelte Endstücke (28, 29) aufweist.

9. Stoßfängeranordnung nach einem der Ansprüche 1 bis 8, **dadurch gekennzeichnet, dass** das Stützelement (18, 18a, 19, 19a - e) auf seiner dem Deformationselement (4-11) zugewandten Seite an einer Seitenwand des Deformationselements (4-11) im Abstand von einer Rückseite (26) des Querträgers (2, 3, 12, 13) befestigt ist.

10. Stoßfängeranordnung nach einem der Ansprüche 1 bis 9, **dadurch gekennzeichnet, dass** das Stützelement (18, 18a, 19, 19a - e) auf seiner dem Deformationselement (4-11) zugewandten Seite an einem längsträgerseitigen Befestigungsflansch des Deformationselements (4-11) befestigt ist.

11. Stoßfängeranordnung nach einem der Ansprüche 1 bis 9, **dadurch gekennzeichnet, dass** die Deformationselemente (4-11) endseitige Bestandteile der Längsträger sind.
